# EUROPEAN PATENT APPLICATION

(11) **EP 4 830 831 A1**
(43) Date of publication of application: **28.10.2026**
(21) Application number: 24907988.0
(22) Date of filing: 16.12.2024
(51) Int. Cl.: B01J 20/34, B01J 20/02, B01J 20/04

(54) **METHOD FOR REGENERATING ALUMINUM-BASED LITHIUM ADSORBENT**

(30) Priority: 18.12.2023 KR 20230184521
(71) Applicant: POSCO Holdings Inc., Pohang-si, Gyeongsangbuk-do 37859 (KR)
(72) Inventor: YANG, Heok, Pohang-si, Gyeongsangbuk-do 37859 (KR); KIM, Ju Young, Pohang-si, Gyeongsangbuk-do 37859 (KR); JUNG, Myungwon, Pohang-si, Gyeongsangbuk-do 37859 (KR); HEO, Jungho, Pohang-si, Gyeongsangbuk-do 37859 (KR); PARK, Woonkyoung, Pohang-si, Gyeongsangbuk-do 37859 (KR); KIM, Ryutae, Pohang-si, Gyeongsangbuk-do 37859 (KR)
(74) Representative: Pfenning, Meinig & Partner mbB
(86) International application number: PCT/KR2024/020430
(87) International publication number: WO 2025/135705

(57) **Abstract**

The present embodiments relate to a method for regenerating an aluminum-based lithium adsorbent. A method for regenerating an aluminum-based lithium adsorbent according to one embodiment includes: preparing an aluminum-based lithium adsorbent having reduced activity; and reacting the adsorbent with a solution containing lithium, wherein, in the solution containing lithium, a concentration of lithium ions may be 0.6 g/L to 5.0 g/L.

## Description

### [TECHNICAL FIELD]

The present embodiments relate to a method for regenerating an aluminum-based lithium adsorbent.

### [BACKGROUND ART]

Various mineral substances are dissolved in salt lakes containing lithium, and many studies have been conducted to extract lithium from such salt lakes. In the past, a general method for extracting lithium was a method of concentrating brine by using a natural evaporation method, removing calcium, magnesium, boron, sulfate ions, and the like remaining in the concentrated lithium-containing solution, and then adding sodium carbonate to extract lithium carbonate.

Recently, methods for extracting lithium by using various adsorbents capable of selectively adsorbing lithium, such as lithium manganese oxide (LMO)-based, titanium-based, zirconium-based, and aluminum-based adsorbents, have been studied. Among these adsorbents, those commercialized are mainly aluminum-based lithium adsorbents.

An aluminum-based lithium adsorbent may have a Li/Al-LDH (Layered Double Hydroxide) structure, and adsorption is performed by insertion, or intercalation, of Li ions into the Li/Al-LDH structure under conditions in which the structure of the Li/Al-LDH is appropriately maintained.

At this time, when structural stability of the Li/Al-LDH is lowered and the structure of the aluminum-based lithium adsorbent is destroyed, the Li/Al-LDH is structurally transformed and dissociated into gibbsite (Al(OH)₃). In this case, since lithium ions are not adsorbed to Al(OH)₃, lithium adsorption efficiency decreases, and thus there is a problem that the adsorbent is deactivated.

Accordingly, research has been conducted on a regeneration method capable of overcoming such a problem in an aluminum-based lithium adsorbent, thereby completing the present invention.

### [DETAILED DESCRIPTION OF THE INVENTION]

### [Technical Problem]

The present embodiments are intended to provide a method for regenerating an aluminum-based lithium adsorbent, which can regenerate a damaged structure of the aluminum-based lithium adsorbent using a solution containing lithium and restore initial lithium adsorption performance.

### [Technical Solution]

A method for regenerating an aluminum-based lithium adsorbent according to one embodiment may include: preparing an aluminum-based lithium adsorbent having reduced activity; and reacting the adsorbent with a solution containing lithium, wherein, in the solution containing lithium, a concentration of lithium ions is 0.6 g/L to 5.0 g/L.

In the solution containing lithium, the concentration of lithium ions may be 0.9 g/L to 1.5 g/L.

A temperature of the solution containing lithium may be 50°C to 100°C, specifically 70°C to 90°C.

The solution containing lithium may include lithium chloride.

The aluminum-based lithium adsorbent may be represented by the following Chemical Formula 1.

[Chemical Formula 1] LiCl·2[Al(OH)₃]·nH₂O

The aluminum-based lithium adsorbent having reduced activity may have, in the entire phase during XRD analysis, a LiCl·2[Al(OH)₃]·H₂O structural phase of 60% to 90%.

The reacting of the adsorbent with the solution containing lithium may use a method of introducing the solution containing lithium into an adsorbent in a column form, or a method of immersing the adsorbent in the solution containing lithium.

The aluminum-based lithium adsorbent after performing the regeneration method may have, in the entire phase during XRD analysis, a LiCl·2[Al(OH)₃]·H₂O structural phase of 95% to 100%.

### [Advantageous Effects]

According to the present embodiments, an aluminum-based lithium adsorbent, which has undergone structural deformation due to long-term use and has lowered adsorption efficiency, is reacted with a solution containing lithium, so that the adsorbent can be reconstructed into its existing structure and can again exhibit high initial adsorption efficiency. In addition, since the adsorbent can be reused through such regeneration of the adsorbent, long-term use may be possible.

### [BRIEF DESCRIPTION OF THE DRAWINGS]

FIG. 1 shows XRD results of the adsorbent of Example 1 regenerated through the regeneration method of the present invention.
FIG. 2 shows XRD results of the adsorbent of Preparation Example 1.
FIG. 3 shows XRD results of the adsorbent of Preparation Example 2.
FIG. 4 comparatively shows XRD results of the adsorbents of Example 1, Comparative Example 2, and Comparative Example 5.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combinations thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### Method for Regenerating Aluminum-Based Lithium Adsorbent

As described above, an aluminum-based lithium adsorbent has a problem in that, as the aluminum-based lithium adsorbent is used for a long time, a structural change occurs and Al(OH)₃ is formed, thereby reducing activity of the adsorbent.

However, in the present embodiment, such a problem is solved by reacting an adsorbent with a solution containing lithium in an aluminum-based lithium adsorbent having reduced activity.

Specifically, a method for regenerating an aluminum-based lithium adsorbent according to one embodiment may include preparing an aluminum-based lithium adsorbent having reduced activity; and reacting the adsorbent with a solution containing lithium.

First, an aluminum-based lithium adsorbent having reduced activity is prepared.

The aluminum-based lithium adsorbent is for adsorbing lithium dissolved in a lithium-containing solution, and may include, for example, aluminum hydroxide. When an aluminum-based lithium adsorbent including aluminum hydroxide is used as in the present embodiment, there are advantages in that the adsorption amount of lithium dissolved in the lithium-containing solution is high, aluminum loss in a desorption process is low, the lifespan of the adsorbent is long, and economic feasibility of a lithium extraction process is excellent. When the regeneration method according to the present invention is used, the lifespan of the adsorbent can be further prolonged, and economic feasibility can be further improved.

The aluminum-based lithium adsorbent may be represented by the following Chemical Formula 1.

[Chemical Formula 1] LiCl·2[Al(OH)₃]·nH₂O

Chemical Formula 1 may be obtained by the reaction of Reaction Formula 1 below.

[Reaction Formula 1] 2AlCl₃·6H₂O + LiCl + 6NaOH + nH₂O → LiCl·2Al(OH)₃·nH₂O + 6NaCl

Li ions are adsorbed into spaces in plate-shaped aluminum hydroxide double layers, and Cl ions are present together with water between the layers to balance charge. Specifically, the crystal structure of Li/Al-LDH is configured such that two layers are repeated, one layer is composed of aluminum hydroxide and intercalated lithium ions, and the other layer is composed of water molecules and anions that balance charge. Through the above structure, the LDH material has advantages of intrinsic exchange capacity, low cost, and low toxicity.

Meanwhile, the aluminum-based lithium adsorbent may be a molded body including an adsorbent powder and a binder.

The adsorbent powder may be, for example, an adsorbent powder including aluminum hydroxide. Advantages of using the adsorbent powder including aluminum hydroxide are the same as those described above.

The binder is for manufacturing the adsorbent powder into a molded body having an appropriate shape and serves to bind adsorbent powders to each other. The binder may include, for example, at least one of polyvinyl chloride (PVC), polysulfone, and polyaniline. In particular, in the present embodiment, it is preferable that the binder include polyvinyl chloride (PVC), which can provide excellent bonding strength between adsorbent powders.

The activity of the aluminum-based lithium adsorbent may be reduced through long-term adsorption steps and desorption steps.

The adsorption step means a step of adsorbing lithium from a lithium-containing solution. Specifically, it may be a step of passing the lithium-containing solution through the adsorbent to adsorb lithium to the adsorbent.

The step of passing the lithium-containing solution through the aluminum-based adsorbent to adsorb lithium to the aluminum-based adsorbent includes, for example, the reaction of Reaction Formula 2 below.

[Reaction Formula 2] (1-x)LiCl·Al(OH)₃·nH₂O + Li⁺ → LiCl·Al(OH)₃·nH₂O + (1-x)Li⁺

The desorption step means a step of desorbing lithium from the aluminum-based lithium adsorbent to which lithium has been adsorbed. Specifically, the desorption step may be a step of passing a medium (for example, distilled water or an aqueous solution including a lithium salt) to obtain a lithium-containing desorption solution.

The step of passing a medium through the aluminum adsorbent to which lithium has been adsorbed to obtain a lithium-containing desorption solution includes, for example, the reaction of Reaction Formula 3 below.

[Reaction Formula 3] LiCl·Al(OH)₃·nH₂O + H₂O → (1-x)LiCl·Al(OH)₃·nH₂O + xLiCl

When the adsorption step and the desorption step as described above are defined as one cycle, an aluminum-based lithium adsorbent that has undergone three or more cycles for 0.5 hours to 20 hours at a temperature range of 20°C to 100°C has reduced activity.

The aluminum-based lithium adsorbent before the activity is reduced may have, in the entire phase during XRD analysis, a LiCl·2[Al(OH)₃]·H₂O structural phase detected in an amount of 90% to 100%, specifically 95% to 100%. On the other hand, the aluminum-based lithium adsorbent having reduced activity may have, in the entire phase during XRD analysis, a LiCl·2[Al(OH)₃]·H₂O structural phase detected in an amount of 60% to 90%, specifically 60% to 88%.

At this time, in the XRD results, the LiCl·2[Al(OH)₃]·H₂O structural phase can be structurally confirmed and distinguished by a method of calculating a ratio between characteristic peaks of the structure of the adsorbent before activity is reduced, in which impurities (NaCl, etc.) are removed by washing with deionized water after manufacturing and adsorption and desorption are performed, and the Al(OH)₃ structure in the adsorbent after activity is reduced by performing adsorption and desorption and losing the interlayer LiCl structure. This is possible because interlayer spacings of the two structures are different, and thus positions of X-ray diffraction peaks are different, and because main peaks are clearly exhibited due to the characteristics of a crystalline layered structure. In order to specifically quantify this, the most common method is to calculate a quantitative ratio using Rietveld refinement based on peaks of standard materials previously input into a database.

As described above, when the LiCl·2[Al(OH)₃]·H₂O structural phase is in a range of 60% to 90% in the entire phase during XRD analysis, the activity of the aluminum-based lithium adsorbent is reduced, and the lithium adsorption amount may be reduced by 5 wt% to 25 wt% compared with a case in which the LiCl·2[Al(OH)₃]·H₂O structural phase is 96.8% in the entire phase during XRD analysis. Specifically, this is a range derived because lithium adsorption performance decreases by an amount not corresponding to the LiCl·2[Al(OH)₃]·H₂O structural phase, and because the change in the LiCl·2[Al(OH)₃]·H₂O structural phase corresponds to 60%/96.8% to 90%/96.8%.

After the aluminum-based lithium adsorbent having reduced activity is prepared as described above, the adsorbent is reacted with a solution containing lithium.

The step of reacting the adsorbent with the solution containing lithium may be performed by using the adsorbent in a wet state as it is.

In addition, the step of reacting the adsorbent with the solution containing lithium may use a method of introducing the solution containing lithium into an adsorbent in a column form, or a method of immersing the adsorbent in the solution containing lithium.

Through the above method, damage to adsorbent pellets can be minimized. Separately, by not including a step of introducing an organic solvent, it is possible to prevent a case in which an organic solvent is added to a mixture of organic and inorganic materials and an organic material is dissolved. Also, by not including a drying step, it is possible to prevent impact applied to an adhesive interface between the binder and the adsorbent as the interval between LDH structures of the adsorbent changes due to dehydration when drying is performed.

In addition, since the form contained in a column is maintained, mechanical impact applied during a process of removing adsorbent powder from the column or refilling the column can be minimized, and the amount of adsorbent pulverized and lost during the process can be minimized. In addition, since the adsorbent does not move, the cycle of adsorption-desorption-regeneration can be controlled only by changing the solution to be flowed, and thus it may be advantageous in process configuration.

At this time, in the solution containing lithium, the concentration of lithium ions may be 0.6 g/L to 5.0 g/L, specifically 0.65 g/L to 3.5 g/L, or 0.7 g/L to 2.0 g/L.

When the concentration is below the above range, the structure of the aluminum-based lithium adsorbent is not reconstructed, and thus it may be difficult to regenerate the activity of the adsorbent to the initial level. When the concentration exceeds the above range, high-concentration lithium-containing brine introduced in the regeneration process remains in the adsorbent, and lithium adsorption is then performed on the adsorbent in this state. At this time, the concentration of the solution in which lithium adsorption should occur is relatively low, and thus there is a problem that sufficient adsorption is not achieved.

The temperature of the solution containing lithium may be 50°C to 100°C, specifically 70°C to 90°C, or 80°C to 90°C.

When the temperature is below the above range, a reaction between the solution containing lithium and the aluminum-based lithium adsorbent having reduced activity does not smoothly occur, and the structure of the adsorbent is not reconstructed, so that it may be difficult to regenerate the activity of the adsorbent to the initial level. When the temperature exceeds the above range, the structure of the adsorbent may be deformed due to high temperature.

In the solution containing lithium, lithium may be provided through a lithium salt. Specifically, as the lithium salt, LiCl, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiI, LiB(C₂O₄)₂, or the like may be used.

Preferably, the solution containing lithium may include lithium chloride. At this time, the concentration and temperature conditions of lithium chloride may be within the ranges described above, and the effects when the ranges are not satisfied may also be the same as described above.

The aluminum-based lithium adsorbent after performing the regeneration method may have, in the entire phase during XRD analysis, a LiCl·2[Al(OH)₃]·H₂O structural phase of 95% to 100%, specifically 97% to 100%, or 99% to 100%.

When the above range is satisfied, due to reconstruction of the structure of the aluminum-based lithium adsorbent, the aluminum-based lithium adsorbent may exhibit lithium adsorption efficiency at the same level as that of the aluminum-based lithium adsorbent when the above-described adsorption step and desorption step are performed for three cycles or fewer for 0.5 hours to 20 hours at a temperature range of 20°C to 100°C after being manufactured.

Hereinafter, embodiments of the present invention will be described in more detail through Examples. However, the following Examples are merely preferred embodiments of the present invention, and the present invention is not limited by the following Examples.

### Preparation Example 1 - Manufacture of Aluminum-Based Adsorbent

Aluminum chloride and lithium chloride were charged into a reactor filled with distilled water so that a molar ratio thereof was 2:1, and then dissolved. An aqueous sodium hydroxide solution prepared at 6 mol/L was introduced into the dissolved mixed solution of aluminum chloride and lithium chloride at a rate of 45.6 mL/min for 1 hour to cause a reaction as shown in Reaction Formula 1 below.

[Reaction Formula 1] 2AlCl₃ + LiCl + 6NaOH → LiCl·2Al(OH)₃·nH₂O + 6NaCl

The reaction was performed at 80°C and a speed of 500 rpm for about 2 hours to obtain a lithium adsorbent slurry. The obtained lithium adsorbent slurry was solid-liquid separated through general reduced-pressure filtration to obtain a cake.

Thereafter, in order to remove sodium chloride remaining in the obtained cake, sodium chloride (NaCl) in the cake was washed using washing water in an amount of 4 times or more the weight of the lithium adsorbent slurry. The washed cake was dried at 40°C to 50°C for 24 hours or more using a dryer to manufacture a lithium adsorbent powder.

The manufactured lithium adsorbent powder was introduced into a mixer together with a binder to form a dough. At this time, the binder was prepared by dissolving 30 wt% of polyvinyl chloride (PVC) in an organic solvent of methyl ethyl ketone (MEK).

Next, the mixing was performed at a speed of 60 rpm until a state suitable for extrusion was obtained. The dough thus manufactured exhibited a torque value of 5 Nm in a rotational viscometer.

Thereafter, 1 kg of the dough was placed in an extruder having a diameter of 50 mm and extruded through a mold at a rate of 50 mm per minute into a cylindrical shape having a diameter of 0.5 mm to 1.0 mm. The extrusion-molded lithium adsorbent was dried in an oven at 45°C for 24 hours to remove the organic solvent.

A column was configured by filling the lithium adsorbent molded as described above into a glass tube having a diameter × length of 2.5 cm × 50 cm.

### Preparation Example 2 - Aluminum-Based Adsorbent Used for a Long Time

An adsorbent powder was manufactured and a column was configured in the same manner as in Preparation Example 1.

Thereafter, at 60°C, an adsorption step of passing 2 L of a lithium-containing solution having a lithium concentration of 0.3 g/L through the adsorbent at a rate of 0.4 L/hr was performed for 4 hours, and a desorption step of passing 1.6 L of deionized water not containing lithium through the adsorbent to which lithium had been adsorbed at a rate of 0.4 L/hr to desorb lithium was performed for 4 hours.

When performing the adsorption step and the desorption step for a total of 8 hours as described above was defined as one cycle, 20 cycles of adsorption and desorption steps were performed.

Accordingly, the adsorbent of Preparation Example 2 had a total adsorption and desorption time, that is, a use time, of 160 hours. That is, the adsorbent of Preparation Example 2 was used for a long time and had reduced activity.

### Example 1

With respect to the adsorbent of Preparation Example 2 used for a long time, a beaker containing 500 mL of a LiCl solution at a temperature of 85°C including lithium ions at a concentration of 1 g/L was connected to 5 g of the adsorbent in a column form, which was in a wet state as it was, the LiCl solution was introduced into the adsorbent at a rate of about 0.1/hr, and the discharged liquid was collected again in the beaker, thereby performing a regeneration process for 72 hours.

### Example 2

A regeneration process was performed on an adsorbent used for a long time in the same manner as in Example 1, except that a concentration condition of lithium ions in the LiCl solution introduced into the adsorbent in the regeneration process was changed to 0.7 g/L.

### Example 3

A regeneration process was performed on an adsorbent used for a long time in the same manner as in Example 1, except that a temperature condition of the LiCl solution introduced into the adsorbent in the regeneration process was changed to 60°C.

### Example 4

A regeneration process was performed on an adsorbent used for a long time in the same manner as in Example 1, except that concentration and temperature conditions of lithium ions in the LiCl solution introduced into the adsorbent in the regeneration process were changed to 0.7 g/L and 60°C.

### Comparative Example 1

A regeneration process was performed on an adsorbent used for a long time in the same manner as in Example 1, except that concentration and temperature conditions of lithium ions in the LiCl solution introduced into the adsorbent in the regeneration process were changed to 0.5 g/L and [temperature omitted in source].

### Comparative Example 2

A regeneration process was performed on an adsorbent used for a long time in the same manner as in Example 1, except that deionized water, which is pure water not containing lithium, was introduced into the adsorbent instead of the LiCl solution.

### Comparative Example 3

A regeneration process was performed on an adsorbent used for a long time in the same manner as in Example 1, except that concentration and temperature conditions of lithium ions in the LiCl solution introduced into the adsorbent in the regeneration process were changed to 0.5 g/L and 60°C.

### Comparative Example 4

A regeneration process was performed on an adsorbent used for a long time in the same manner as in Example 1, except that concentration and temperature conditions of lithium ions in the LiCl solution introduced into the adsorbent in the regeneration process were changed to 0.3 g/L and 60°C.

### Comparative Example 5

A regeneration process was performed on an adsorbent used for a long time in the same manner as in Example 1, except that deionized water not containing lithium was introduced into the adsorbent instead of the LiCl solution, and the temperature of the corresponding solution was set to 60°C.

### Experimental Example 1 - Analysis of Lithium Readsorption Amount of Adsorbent

With respect to the above Examples and Comparative Examples, the amount of lithium reabsorbed by the adsorbent through the regeneration process from the solution containing lithium, that is, the lithium readsorption amount, was measured.

In the step of reacting the adsorbent with the solution containing lithium, that is, in the regeneration process, the lithium readsorption amount was derived by subtracting the amount of lithium contained in the discharged liquid after performing the regeneration process from the amount of lithium in the solution containing lithium used. When the lithium concentration in the solution containing lithium increased after performing the regeneration process, that is, when lithium leaked out from the adsorbent, it was indicated as a negative (-) value.

Table 1 below summarizes lithium readsorption amounts of the Examples and Comparative Examples.

**[Table 1]**

| | Temperature of Solution Containing Lithium (°C) | Lithium Concentration in Solution Containing Lithium Before Regeneration Process (g/L) | Lithium Concentration in Discharged Liquid Containing Lithium After Regeneration Process (g/L) | Lithium Readsorption Amount (mg) |
|---|---|---|---|---|
| Example 1 | 85 | 0.997 | 0.957 | 20.1 |
| Example 2 | 85 | 0.705 | 0.692 | 6.5 |
| Example 3 | 60 | 0.997 | 0.986 | 5.8 |
| Example 4 | 60 | 0.705 | 0.695 | 5.0 |
| Comparative Example 1 | 85 | 0.505 | 0.506 | -0.7 |
| Comparative Example 2 | 85 | 0.000 | 0.167 | -83.4 |
| Comparative Example 3 | 60 | 0.505 | 0.517 | -5.8 |
| Comparative Example 4 | 60 | 0.309 | 0.334 | -12.4 |
| Comparative Example 5 | 60 | 0.0 | 0.116 | -57.8 |

As can be confirmed from the above table, when the lithium concentration (g/L) in the solution containing lithium before performing the regeneration process was less than 0.7 g/L, lithium was not readsorbed into the adsorbent but rather desorbed, and the lithium concentration in the discharged liquid containing lithium after performing the regeneration process increased.

In addition, through comparison between Example 1 and Example 3, it can be confirmed that the lithium readsorption amount was 3.5 times greater at 85°C than at 60°C.

### Experimental Example 2 - XRD (X-ray Diffraction) Analysis of Adsorbent

XRD analysis was performed to measure structural phases in the adsorbent of Preparation Example 1 before performing the adsorption and desorption steps after manufacture of the adsorbent, the adsorbent of Preparation Example 2 after performing the adsorption and desorption steps for a long time, Example 1, Comparative Example 2, and Comparative Example 5.

In the entire phase of the adsorbent, the LiCl·2[Al(OH)₃]·H₂O structural phase may be quantitatively analyzed by using X-ray diffraction (XRD) analysis with Cu Kα X-rays. Specifically, quantitative analysis may be possible by placing particles of the adsorbent to be measured in a holder, irradiating the particles with X-rays, and analyzing a diffraction lattice generated therefrom.

Sampling was performed by placing a powder sample of particles to be measured in a groove recessed in the center of a holder for general powder, making the surface even using a slide glass, and making the height of the sample the same as an edge of the holder. Then, X-ray diffraction analysis was performed using a Bruker D8 Endeavor equipped with a LynxEye XE-T position sensitive detector (light source: Cu Kα, λ=1.54 Å) under conditions of FDS 0.5°, a 2θ=0° to 90° region, a step size of 0.02°, and a total scan time of about 20 minutes.

For the measured data, Rietveld refinement was performed in consideration of charge at each site (metal ions of transition metal sites are +3, and Ni ions of Li sites are +2) and cation mixing. In structural phase analysis, instrumental broadening was considered using a Fundamental Parameter Approach (FPA) implemented in the Bruker TOPAS program, and all peaks in the measurement range were used during fitting. The peak shape was fitted using only a Lorentzian contribution with FP (First Principle) among peak types available in TOPAS, and strain was not considered at this time.

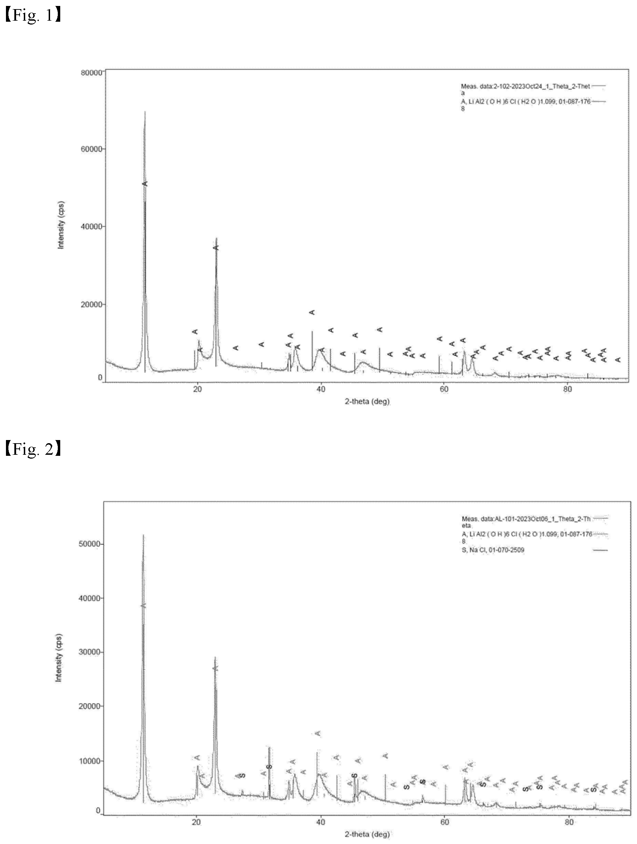

FIG. 2 shows XRD results of the adsorbent of Preparation Example 1 before performing the adsorption and desorption steps after manufacture of the adsorbent.

As a result of quantitative XRD analysis, it was confirmed that, in the entire phase, a LiCl·2[Al(OH)₃]·H₂O phase was present in an amount of 96.8%, and a NaCl phase was present in an amount of 3.2%.

Since Al(OH)₃ is manufactured using a reaction of AlCl₃ + 3NaOH during manufacture of the adsorbent, a small amount of NaCl, NaOH, and the like may be present. If NaCl, which tends to grow into large crystals, remains, it may damage the adsorbent, but since it has high solubility in water and is expected to be removed as an impurity in the adsorption step and desorption step, it can be determined that there is no problem in using the adsorbent of Preparation Example 1.

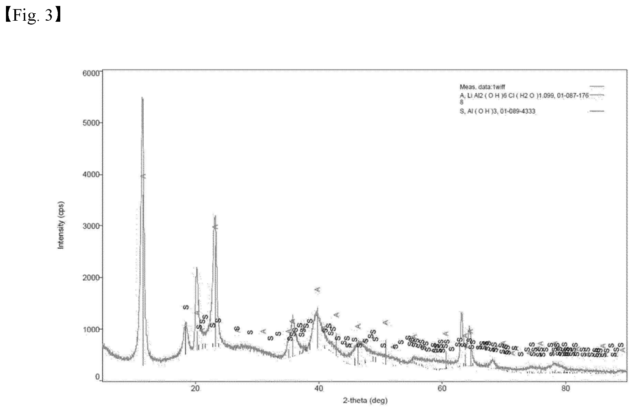

FIG. 3 shows XRD results of the adsorbent of Preparation Example 2 used for 160 hours.

As a result of quantitative XRD analysis, it was confirmed that, in the entire phase, a LiCl·2[Al(OH)₃]·H₂O phase was present in an amount of 87.2%, and an Al(OH)₃ phase was present in an amount of 12.8%.

That is, it was confirmed through repeated adsorption/desorption experiments that a part of the adsorbent structure was changed into gibbsite (Al(OH)₃). Specifically, in the LiCl·2[Al(OH)₃]·H₂O structure, an appropriate amount of LiCl was included and the interval between layer structures was widely present, but due to repeated adsorption and desorption, LiCl escaped from the adsorbent, and the structure changed into Al(OH)₃ having a narrow interval, so that it can be determined that the structure of the adsorbent was damaged.

FIG. 1 shows XRD results of the adsorbent of Example 1 regenerated through the regeneration method described above.

As a result of quantitative XRD analysis, it was confirmed that, in the entire phase, a LiCl·2[Al(OH)₃]·H₂O phase was present in an amount of 100%, and no other phases were detected.

That is, it can be confirmed that the adsorbent structure was restored through the above-described method for regenerating an adsorbent. Specifically, it can be confirmed that the structure was not only completely restored, but also reconstructed to have more excellent lithium adsorption performance through readsorption of lithium.

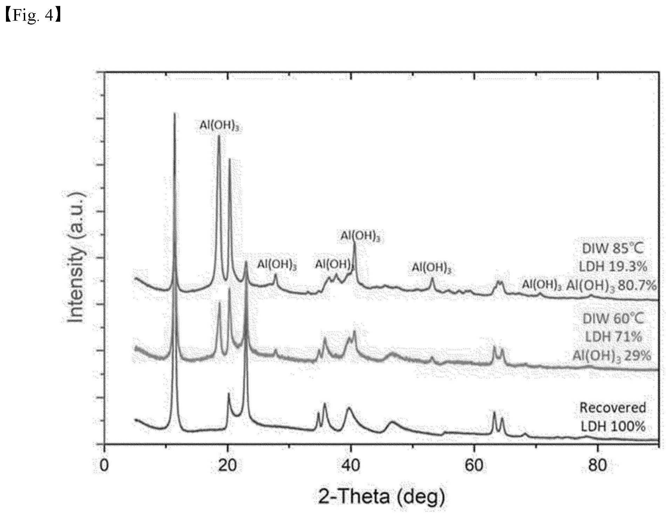

FIG. 4 comparatively shows XRD results of the adsorbent of Example 1 regenerated through the regeneration method described above with Comparative Example 2 and Comparative Example 5 having different concentration and temperature conditions.

As a result of quantitative XRD analysis, it was confirmed that, in Comparative Example 2, a LiCl·2[Al(OH)₃]·H₂O phase was present in an amount of 19.3%, and an Al(OH)₃ phase was present in an amount of 80.7% in the entire phase.

As a result of quantitative XRD analysis, it was confirmed that, in Comparative Example 5, a LiCl·2[Al(OH)₃]·H₂O phase was present in an amount of 71.0%, and an Al(OH)₃ phase was present in an amount of 29.0% in the entire phase.

In the case of Comparative Examples 2 and 5, in which the solution reacted with the adsorbent did not contain lithium, the adsorbent structure severely collapsed. In particular, in the case of Comparative Example 2 in which the temperature of the solution reacted with the adsorbent was 85°C, it can be confirmed that the structure of the adsorbent collapsed by 50% or more compared with Comparative Example 5 in which the temperature of the solution reacted with the adsorbent was 60°C.

Through this, it can be seen that an appropriate temperature range of the solution containing lithium according to one embodiment of the present invention is 70°C to 90°C, which is specific to the concentration of lithium ions in the solution containing lithium according to one embodiment of the present invention.

Referring to FIGS. 1 to 4, in the case of Examples 1 to 4, as a result of appropriately controlling regeneration process conditions of the adsorbent, such as the concentration of lithium ions in the solution containing lithium, the temperature of the solution, the introduction rate and amount of the corresponding solution, it was confirmed that the LiCl·2[Al(OH)₃]·H₂O structure was restored and implemented within the range according to the present invention. As a result, it can be confirmed that lithium adsorption efficiency will also exhibit the same or greater effect as that of the initial adsorbent.

The present invention is not limited to the above embodiments and may be manufactured in various different forms. A person having ordinary skill in the art to which the present invention pertains will understand that the present invention may be embodied in other specific forms without changing the technical spirit or essential features of the present invention. Therefore, the above-described embodiments should be understood as illustrative in all respects and not restrictive.

## Claims

1. A method for regenerating an aluminum-based lithium adsorbent, comprising:
preparing an aluminum-based lithium adsorbent having reduced activity; and
reacting the adsorbent with a solution containing lithium,
wherein, in the solution containing lithium, a concentration of lithium ions is 0.6 g/L to 5.0 g/L.

2. The method for regenerating an aluminum-based lithium adsorbent of claim 1,
wherein, in the solution containing lithium, the concentration of lithium ions is 0.9 g/L to 1.5 g/L.

3. The method for regenerating an aluminum-based lithium adsorbent of claim 1,
wherein a temperature of the solution containing lithium is 50°C to 100°C.

4. The method for regenerating an aluminum-based lithium adsorbent of claim 1,
wherein a temperature of the solution containing lithium is 70°C to 90°C.

5. The method for regenerating an aluminum-based lithium adsorbent of claim 1,
wherein the solution containing lithium comprises lithium chloride.

6. The method for regenerating an aluminum-based lithium adsorbent of claim 1,
wherein the aluminum-based lithium adsorbent is represented by the following Chemical Formula 1:
[Chemical Formula 1] LiCl·2[Al(OH)₃]·nH₂O

7. The method for regenerating an aluminum-based lithium adsorbent of claim 1,
wherein the aluminum-based lithium adsorbent having reduced activity has, in an entire phase during XRD analysis, a LiCl·2[Al(OH)₃]·H₂O structural phase of 60% to 90%.

8. The method for regenerating an aluminum-based lithium adsorbent of claim 1,
wherein the reacting of the adsorbent with the solution containing lithium uses a method of introducing the solution containing lithium into an adsorbent in a column form or a method of immersing the adsorbent in the solution containing lithium.

9. The method for regenerating an aluminum-based lithium adsorbent of claim 1,
wherein the aluminum-based lithium adsorbent after performing the regeneration method has, in an entire phase during XRD analysis, a LiCl·2[Al(OH)₃]·H₂O structural phase of 95% to 100%.
